# EUROPÄISCHE PATENTSCHRIFT

(11) **EP 3 084 234 B1**
(45) Veröffentlichungstag und Bekanntmachung des Hinweises auf die Patenterteilung: **20.06.2018**
(21) Anmeldenummer: 14811923.3
(22) Anmeldetag: 15.12.2014
(51) Int. Cl.: F16B 13/12

(54) **VERSATZDÜBELVORRICHTUNG**
OFFSET DOWEL DEVICE
DISPOSITIF DE CHEVILLE DE DÉPORT

(30) Priorität: 20.12.2013 EP 13198880
(43) Veröffentlichungstag der Anmeldung: 26.10.2016
(73) Patentinhaber: Hilti Aktiengesellschaft, 9494 Schaan (LI)
(72) Erfinder: MELZER, Lars, 86978 Hohenfurch (DE)
(86) Internationale Anmeldenummer: PCT/EP2014/077676
(87) Internationale Veröffentlichungsnummer: WO 2015/091312

(56) Entgegenhaltungen:
- DE-U1- 20 106 520
- US-A- 5 409 336

## Beschreibung

Die vorliegende Erfindung betrifft eine Dübelvorrichtung enthaltend einen über einen Teil der Gesamtlänge der Dübelvorrichtung erstreckenden Spreizbereich, der durch Eindrehen einer Spreizschraube in die Dübelvorrichtung aufspreizbar ist, und ein hülsenförmigen Schaft, in den die Spreizschraube einführbar ist.

Eine Dübelvorrichtung bzw. ein Dübel (auch Schraubdübel genannt) ist ein in der Verbindungstechnik gebrauchtes Bauteil, das bei verschiedenen Werkstoffen zur Anwendung kommt, in die sich eine Schraube nicht direkt - wie zum Beispiel eine Holzschraube in Holz - eindrehen lässt. Der Dübel wird in ein zylindrisches Loch in vorwiegend gemauerte, betonierte oder mit Platten versehene Wände, Decken oder Böden als Zwischenteil eingesetzt. Die Holz- oder Spanplatten-Schraube spreizt den Dübel beim Eindrehen, wobei ein Kraftschluss und in geringerem Maße manchmal auch ein Formschluss gegen Herausziehen zwischen Dübel und ihn umgebendem Material entsteht. Zum Erstellen des Lochs im harten Werkstoff wird ein Bohrer mit Hartmetallschneiden (Betonbohrer) gebraucht.

Ein derartiger, konventioneller Dübel ist beispielsweise in der deutschen Gebrauchsmusterschrift DE 201 06 520 offenbart. Der in dieser Druckschrift des Stands der Technik gezeigte Dübel weist dabei einen sich axial über einen Teil der Länge des Dübels erstreckendenden Spreizbereich auf. Dieser Spreizbereich wird durch das Eindrehen einer Spreizschraube in den Dübel aufgespreizt. Durch den aufgespreizten und verformten Dübel entsteht in dem Bohrloch, in das der Dübel und anschließend die Schraube eingeführt wurden, eine formschlüssige Verbindung zwischen der Schraube der Bohrlochwand. Aufgrund dieser formschlüssigen Verbindung zwischen der in den Dübel eingedrehten Schraube und der Bohrlochwand wird eine hohe Haftreibung erzeugt, die die Schraube in dem Bohrloch hält.

Trotz der relativ hohen Haftreibung ist es jedoch weiterhin möglich, dass durch entsprechend hohe Zugkräfte, die an dem freien Schraubenende wirken, die Schraube samt Dübel wieder aus dem Bohrloch gezogen werden kann.

Aus der US 5,409,336 ist ein Anker zum Aufhängen von Objekten an einer Wand bekannt.

Es ist daher Aufgabe der vorliegenden Erfindung eine verbesserte Dübelvorrichtung bereitzustellen, mit dem noch höheren Zuglasten bzw. Zugkräften widerstanden werden kann.

Die vorstehend genannte Aufgabe wird durch den erfindungsgemäßen Gegenstand des unabhängigen Anspruchs 1 gelöst. Weitere vorteilhafte Ausgestaltungen der vorliegenden Erfindung sind in dem abhängigen Anspruch beschrieben.

Die vorstehend genannte Aufgabe wird gelöst durch eine Dübelvorrichtung enthaltend einen über einen Teil der Gesamtlänge der Dübelvorrichtung erstreckenden Spreizbereich, der durch Eindrehen einer Spreizschraube in die Dübelvorrichtung aufspreizbar ist, und ein hülsenförmigen Schaft, in den die Spreizschraube einführbar ist.

Erfindungsgemäss ist dabei eine Anbindungseinrichtung vorgesehen, die ein längliches Versatzelement sowie ein Anbindungselement enthält, wobei das längliche Versatzelement ein erstes Ende sowie ein zweites Ende und das Anbindungselement ein erstes Ende sowie eine zweites Ende aufweist, und wobei das erste Ende des Versatzelements so mit dem hülsenförmigen Schaft verbunden ist, dass sich das Versatzelement im Wesentlichen senkrecht zu dem hülsenförmigen Schaft und dem Spreizbereich erstreckt, und wobei das zweite Ende des Versatzelements so mit dem ersten Ende des Anbindungselements verbunden ist, dass sich das Anbindungselement im Wesentlichen senkrecht zu dem Versatzelement und im Wesentlichen parallel zu dem hülsenförmigen Schaft und dem Spreizbereich erstreckt. Mit Hilfe des länglichen Versatzelements, das eine exzentrische (bzw. nichtkonzentrische) Anordnung des Spreizbereichs zum Anbindungselement erzeugt, agieren die an dem freien Schraubenende wirkenden Zugkräfte nicht mehr entlang einer Mittelachse der in dem Werkstoff befindlichen Dübelvorrichtung. Hierdurch kann die Dübelvorrichtung wesentlich höheren Zugkräften widerstehen, ohne aus dem jeweiligen Werkstoff gezogen zu werden.

Um eine schnelle, effektive und wieder lösbare Verbindung zwischen dem hülsenförmigen Schaft und der ersten Ende des Versatzelements zu erreichen, enthält die Anbindungseinrichtung ein hülsenförmigen Einsteckschaft, welcher an dem ersten Ende des Versatzelements positioniert ist und in welchen der hülsenförmige Schaft zur Verbindung mit dem Versatzelement aufnehmbar ist.

Gemäss einer vorteilhaften Ausgestaltungsform der vorliegenden Erfindung kann vorgesehen sein, dass das Anbindungselement in Form eines Gewindestifts ausgestaltet ist. Der Gewindestift kann dabei ein Außen- und/oder ein Innengewinde aufweisen. Hierdurch können Bauteile, Vorrichtungen oder ähnliches auf einfache Art und Weise mit der Dübelvorrichtung wiederlösbar verbunden werden.

Alternativ ist es auch möglich, dass das Anbindungselement in jeder anderen geeigneten Form eines Verbindungselements, wie z.B. eines Hakens, eines Bolzens oder ähnliches ausgestaltet ist.

Die vorliegende Erfindung wird bezüglich vorteilhafter Ausführungsbeispiele näher erläutert, hierbei zeigt
- Fig. 1: eine Seitenansicht auf eine Dübelvorrichtung mit einen Spreizbereich, einem hülsenförmigen Schaft sowie einer Anbindungseinrichtung mit einem länglichen Versatzelement und einem Anbindungselement gemäß einer ersten Ausführungsform;
- Fig. 2: eine perspektivische Unteransicht auf die Dübelvorrichtung gemäß der ersten Ausführungsform;
- Fig. 3: eine Unteransicht auf die Dübelvorrichtung gemäß der ersten Ausführungsform;
- Fig. 4: eine Seitenansicht auf eine erfindungsgemässe Dübelvorrichtung mit einen Spreizbereich und einem hülsenförmigen Schaft gemäß einer zweiten Ausführungsform;
- Fig. 5: eine perspektivische Unteransicht auf die Anbindungseinrichtung mit dem länglichen Versatzelement und dem Anbindungselement gemäß der zweiten Ausführungsform;
- Fig. 6: eine Seitenansicht auf die Anbindungseinrichtung mit dem länglichen Versatzelement und dem Anbindungselement und der Dübelvorrichtung gemäß der zweiten Ausführungsform;
- Fig. 7: eine perspektivische Unteransicht auf die Anbindungseinrichtung mit dem länglichen Versatzelement und dem Anbindungselement und der Dübelvorrichtung gemäß der zweiten Ausführungsform;
- Fig. 8: eine Seitenansicht auf die Dübelvorrichtung in einem Werkstoff und eine Schraube außerhalb der Dübelvorrichtung; und
- Fig. 9: eine Seitenansicht auf die Dübelvorrichtung in einem Werkstoff und eine Schraube innerhalb der Dübelvorrichtung.

### AUSFÜHRUNGSBEISPIELE

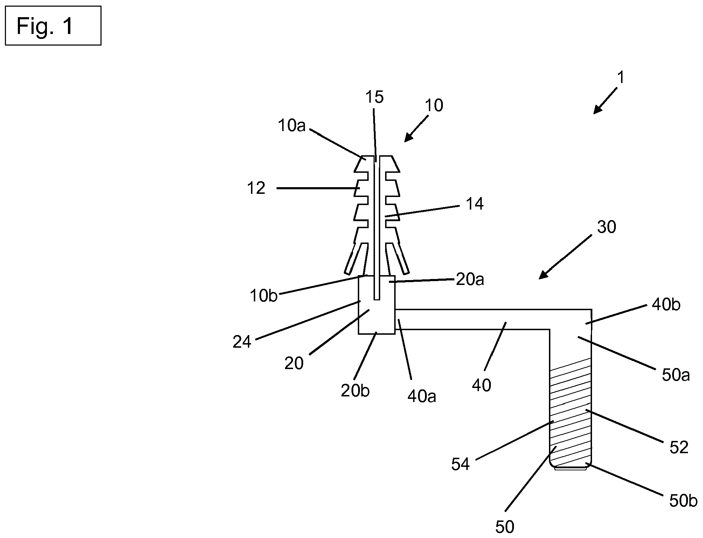

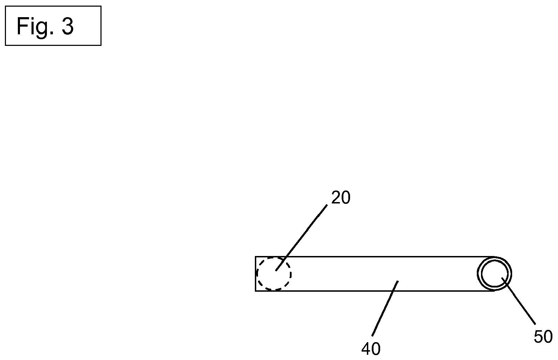

Fig. 1 bis 3 zeigen eine Dübelvorrichtung 1 gemäß einer ersten Ausführungsform.

Die Dübelvorrichtung 1 ist dafür vorgesehen in ein zuvor erstelltes Bohrloch B in einem Werkstoff W, wie z.B. Beton, Ziegel oder ähnliches, eingeführt zu werden, um einem Anbindungselement 30 entsprechenden Halt in dem Werkstoff W für eine zusätzliche Vorrichtung bzw. ein zusätzliches Bauteil zu bieten. Die zusätzliche Vorrichtung bzw. das zusätzliche Bauteil sind nicht in den Figuren gezeigt. Die Dübelvorrichtung 1 enthält einen Spreizbereich 10, einen hülsenförmigen Schaft 20 sowie eine Anbindungseinrichtung 30.

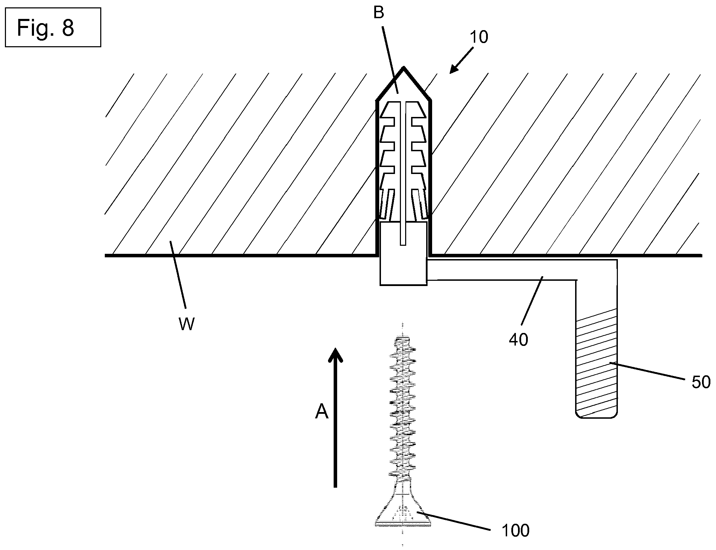

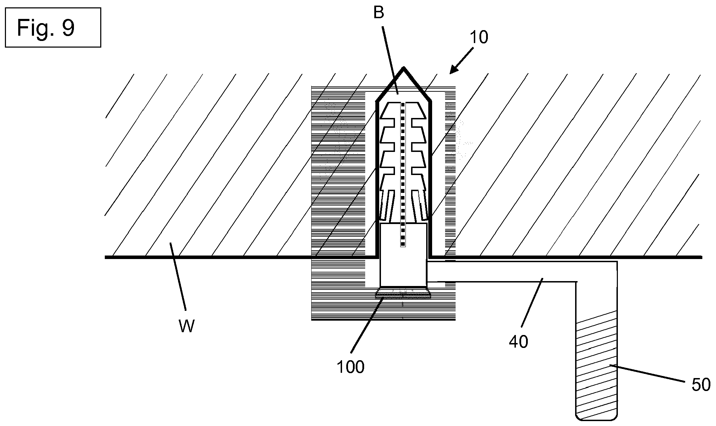

Der Spreizbereich 10 ist einstückig gefertigt und weist ein hülsenförmiges vorderes Ende 10a und ein ebenfalls hülsenförmiges hinteres Ende 10b auf, wobei ein Innendurchmesser des hülsenförmigen vorderen Endes 10a kleiner als ein Innendurchmesser des hülsenförmigen hinteren Endes 10b ist. Das vordere Ende 10a ist ein Einsteckende der Dübelvorrichtung 1, mit dem voran (in Richtung A) die Dübelvorrichtung 1 in das Bohrloch B, welches in einen Werkstoff W gebohrt wurde, eingebracht wird (vgl. Fig. 8 und 9).

Im Spreizbereich 10 weist die Dübelvorrichtung 1 zwei sich in Dübellängsrichtung erstreckende Spreizschenkel 12, 14 auf, die durch zwei sich vom vorderen Ende 10a zum hinteren Ende 10b erstreckende und jeweils um 180° in Umfangsrichtung versetzt angeordnete Längsschlitze 15 gebildet sind. Der Spreizbereich 10 besteht aus Kunststoff. Alternativ kann der Spreizbereich 10 auch aus jedem anderen geeigneten Material bestehen.

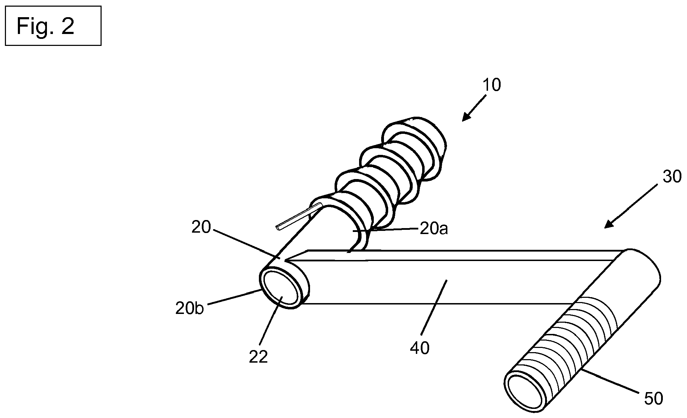

Der hülsenförmige Schaft 20 enthält ein vorderes Ende 20a sowie ein hinteres Ende 20b. Das vordere Ende 20a des hülsenförmigen Schafts 20 ist fest mit dem hinteren Ende 10b des Spreizbereichs 10 verbunden und weist eine zylindrische Form mit einer zylindrischen Durchgangsbohrung 22 (vgl. Fig. 2) auf. Der hülsenförmige Schaft 20 besteht aus Kunststoff. Alternativ kann der hülsenförmige Schaft 20 auch aus Metall oder jedem anderen geeigneten Material bestehen.

Die Anbindungseinrichtung 30 enthält ein Versatzelement 40 in Form eines länglichen Schafts 40 sowie ein Anbindungselement 50.

Das in Form des länglichen Schafts ausgebildete Versatzelement 40 weist einen rechtwinkligen Querschnitt auf und enthält ein erstes Ende 40a und ein zweites Ende 40b. Alternativ kann der Querschnitt des länglichen Schafts 40 auch rund sein oder jede andere geeignete Form aufweisen. Das erste Ende 40a des länglichen Schafts 40 ist mit der Außenwand (Mantel) 24 des hülsenförmigen Schafts 20 stoffschlüssig verbunden. Die stoffschlüssige Verbindung kann durch eine Klebeverbindung, Schweißverbindung oder ähnliches verwirklicht sein.

Das Anbindungselement 50 ist in Form eines Gewindestifts 52 mit einem Außengewinde 54 ausgestaltet und enthält ein erstes Ende 50a und ein zweites Ende 50b.

Das erste Ende 50a des Anbindungselements 50 ist fest mit dem zweiten Ende 40b des länglichen Schafts 40 verbunden. An das Außengewinde 54 des zweiten Endes 50b des Anbindungselements 50 kann ein (nicht gezeigter) weiterer Gegenstand geschraubt werden. Alternativ kann das Anbindungselement 50 auch in Form eines Hakens ausgestaltet sein.

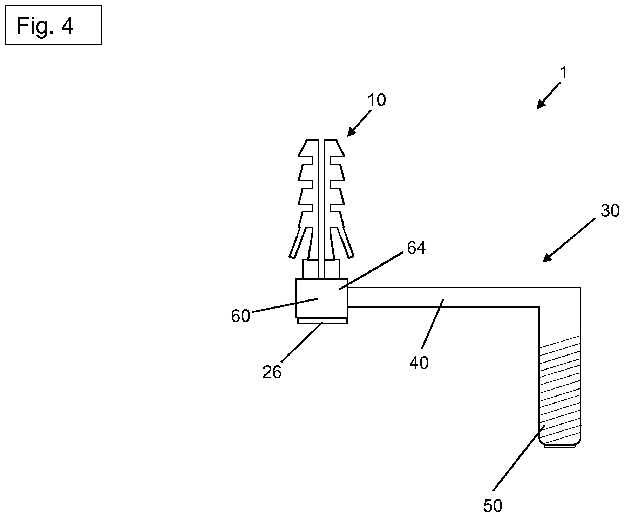

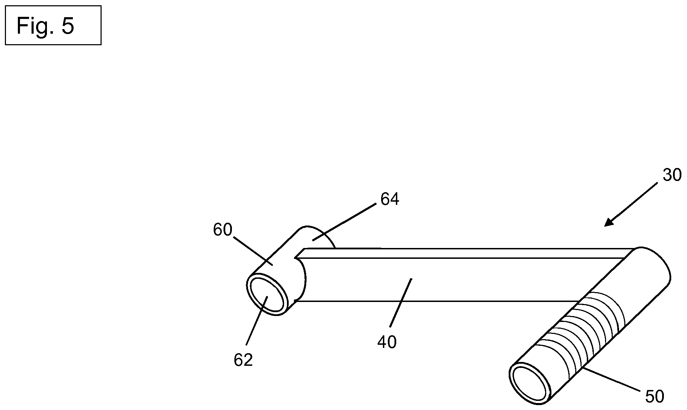

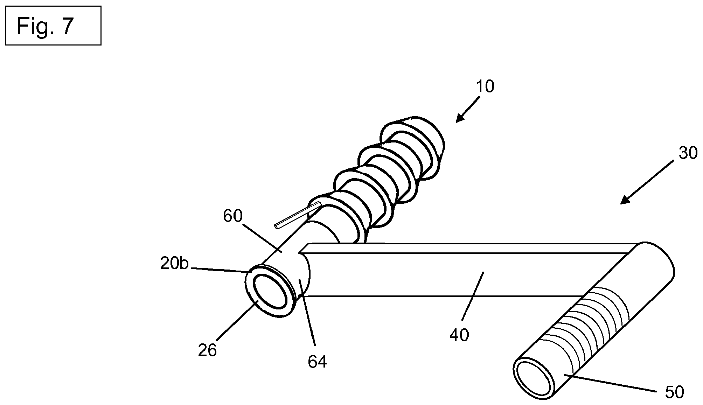

Fig. 4 bis 7 zeigen eine erfindungsgemäße Dübelvorrichtung 1 gemäß einer zweiten Ausführungsform. Die Dübelvorrichtung 1 gemäß der zweiten Ausführungsform ist ebenfalls dafür vorgesehen in ein zuvor erstelltes Bohrloch B in einem Werkstoff W, wie z.B. Beton, Ziegel oder ähnliches, eingeführt zu werden, um einem Anbindungselement 50 entsprechenden Halt in dem Werkstoff W für eine zusätzliche Vorrichtung bzw. ein zusätzliches Bauteil zu bieten. Gemäß der zweiten Ausführungsform enthält die Dübelvorrichtung 1 einen Spreizbereich 10, einen hülsenförmigen Schaft 20 sowie eine Anbindungseinrichtung 30.

Der Spreizbereich 10 ist einstückig gefertigt und weist ein hülsenförmiges vorderes Ende 10a und ein ebenfalls hülsenförmiges hinteres Ende 10b auf, wobei ein Innendurchmesser des hülsenförmigen vorderen Endes 10a kleiner als ein Innendurchmesser des hülsenförmigen hinteren Endes 10b ist.

Im Spreizbereich 10 weist die Dübelvorrichtung 1 zwei sich in Dübellängsrichtung erstreckende Spreizschenkel 12, 14 auf, die durch zwei sich vom vorderen Ende 10a zum hinteren Ende 10b erstreckende und jeweils um 180° in Umfangsrichtung versetzt angeordnete Längsschlitze 15 gebildet sind. Der Spreizbereich 10 besteht aus Kunststoff. Alternativ kann der Spreizbereich 10 auch aus jedem anderen geeigneten Material bestehen.

Der hülsenförmige Schaft 20 enthält ein vorderes Ende 20a sowie ein hinteres Ende 20b. An dem hinteren Ende 20b ist ein Randelement 26 fest angeordnet. Das Randelement 26 weist im Wesentlichen die Form eines Flansches auf und dient (wie nachfolgend detailliiert beschrieben) als Anschlagsbegrenzung für den hülsenförmigen Schaft 20 in der Anbindungseinrichtung 30. Darüber hinaus ist der hülsenförmige Schaft 20 fest mit dem hinteren Ende 10b des Spreizbereichs 10 verbunden und weist eine zylindrische Form mit einer zylindrischen Durchgangsbohrung 22 auf. Der hülsenförmige Schaft 20 besteht aus einem oder mehreren Kunststoffen. Alternativ kann der hülsenförmige Schaft 20 auch aus jedem anderen geeigneten Material bestehen.

Das hintere Ende 10b des Spreizbereichs 10 sowie das vordere Ende 20a des hülsenförmigen Schafts 20 sind fest miteinander verbunden.

Gemäß der zweiten Ausführungsform der Dübelvorrichtung 1 enthält die Anbindungseinrichtung 30 einen hülsenförmigen Einsteckschaft 60, einen länglichen Schaft 40 sowie ein Anbindungselement 50.

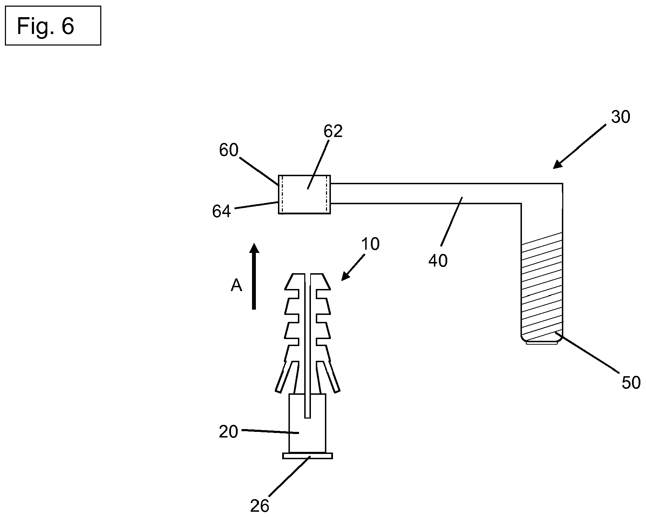

Der hülsenförmige Einsteckschaft 60 weist im Wesentlichen eine zylindrische Form mit einer zylindrischen Durchbohrung 62 auf. Die Durchbohrung 62 dient dazu, den hülsenförmigen Schaft 20 aufzunehmen. Der Durchmesser der Durchbohrung 62 ist dazu nur unwesentlich größer als der Durchmesser des hülsenförmigen Schafts 20, so dass der Spreizbereich 10 und auch der hülsenförmige Schaft 20 durch die zylindrische Durchbohrung 62 des hülsenförmigen Einsteckschafts 60 passen. Der hülsenförmige Schaft 20 sitzt passgenau in der Durchbohrung 62 des hülsenförmigen Einsteckschafts 60. Das Randelement 26 des hülsenförmigen Schafts 20 begrenzt bzw. hält den hülsenförmigen Schaft 20 in dem hülsenförmigen Einsteckschaft 60 (vgl. Fig. 4 und 6).

Der längliche Schaft 40 gemäß der zweiten Ausführungsform entspricht im Wesentlichen der ersten Ausführungsform. Das erste Ende des länglichen Schafts 40 ist mit der Außenwand (Mantel) 64 des hülsenförmigen Einsteckschafts 60 fest verbunden.
Zur Anbringung des Spreizbereichs 10 und des hülsenförmigen Schafts 20 an dem Anbindungselement 50 der Anbindungseinrichtung 30 werden der Spreizbereich 10 sowie der hülsenförmige Schaft 20 durch die Durchgangsbohrung 62 des hülsenförmigen Einsteckschafts 60 geführt. Wie oben bereits beschrieben, begrenzt bzw. hält das Randelement 26 des hülsenförmigen Schafts 20 den hülsenförmigen Schaft 20 in dem hülsenförmigen Einsteckschaft 60 (vgl. Fig. 4 und 6).

Zur Befestigung der Dübelvorrichtung 1 an einer Beton- oder Ziegelwand (Werkstoff W) ist zunächst ein zylindrisches Bohrloch B anzufertigen. Das Bohrloch B kann mit Hilfe einer (nicht gezeigten) Bohrmaschine, eines Bohrhammers oder ähnlichem in dem Werkstoff erzeugt werden. Der Querschnitt des Bohrlochs B entspricht dabei im Wesentlichen dem Querschnitt des Spreizbereichs 10 im nicht gespreizten Zustand (vgl. Fig. 8 und 9). Damit der Spreizbereich 10 sowie der hülsenförmige Schaft 20 in das Bohrloch B eingeführt werden können, muss der Durchmesser des Bohrlochs B ein wenig größer sein muss als der Durchmesser des Spreizbereichs 10 im nicht gespreizten Zustand und des hülsenförmigen Schafts 20.

Nachdem der Spreizbereich 10 der Dübelvorrichtung in dem Bohrloch B positioniert ist, kann eine Spreizschraube 100 durch die zylindrische Durchgangsbohrung 22 des hülsenförmigen Schafts 20 eingeführt und im Inneren des Spreizbereichs 10 positioniert werden. Durch das Eindrehen der Spreizschraube 100 in den Spreizbereich 10 werden die Spreizschenkel 12, 14 nach Außen gedehnt, wodurch der Spreizbereich 10 so verformt wird, dass eine formschlüssige Verbindung zwischen Spreizschraube 100 und Bohrlochwand (Werkstoff W) entsteht. Wenn der Spreizbereich 10 in dem Bohrloch B positioniert und die Spreizschraube 100 in den Spreizbereich 10 eingeführt ist, liegt der längliche Schaft 40 des Anbindungselements 50 an der Beton- bzw. Ziegelwand an. An das Anbindungselement 50 kann nun ein Gegenstand geschraubt werden.

Durch die versetzte Anordnung des Spreizbereichs 10 und des Anbindungselements 50 können wesentlich höhere Kräfte an dem Anbindungselement 50 wirken, ohne dass die Dübelvorrichtung 1 aus dem Werkstoff W gezogen werden kann.

## Patentansprüche

1. Dübelvorrichtung (1) enthaltend
- einen über einen Teil der Gesamtlänge der Dübelvorrichtung (1) erstreckenden Spreizbereich (10), der durch Eindrehen einer Spreizschraube (100) in die Dübelvorrichtung (1) aufspreizbar ist, und
- ein hülsenförmigen Schaft (20), in den die Spreizschraube (100) einführbar ist;
**gekennzeichnet durch** eine Anbindungseinrichtung (30), die ein längliches Versatzelement (40) sowie ein Anbindungselement (50) enthält, wobei das längliche Versatzelement (40) ein erstes Ende (40a) sowie ein zweites Ende (40b) und das Anbindungselement (50) ein erstes Ende (50a) sowie eine zweites Ende (50b) aufweist, und wobei das erste Ende (40a) des Versatzelements (40) so mit dem hülsenförmigen Schaft (20) verbunden ist, dass sich das Versatzelement (40) im Wesentlichen senkrecht zu dem hülsenförmigen Schaft (20) und dem Spreizbereich (10) erstreckt, und wobei das zweite Ende (40b) des Versatzelements (40) so mit dem ersten Ende (50a) des Anbindungselements (50) verbunden ist, dass sich das Anbindungselement (50) im Wesentlichen senkrecht zu dem Versatzelement (40) und im Wesentlichen parallel zu dem hülsenförmigen Schaft (20) und dem Spreizbereich (10) erstreckt, wobei die Anbindungseinrichtung (30) ein hülsenförmigen Einsteckschaft (60) enthält, welcher an dem ersten Ende (40a) des Versatzelements (40) positioniert ist und in welchen der hülsenförmige Schaft (20) zur Verbindung mit dem Versatzelement (40) aufnehmbar ist.

2. Dübelvorrichtung (1) nach Anspruch 1,
**dadurch gekennzeichnet, dass** das Anbindungselement (50) in Form eines Gewindestifts (52) ausgestaltet ist.

## Claims

1. Dowel device (1) comprising
- an expansion region (10) that extends over part of the total length of the dowel device (1) and can be expanded by screwing an expansion screw (100) into the dowel device (1) and
- a sleeve-shaped shank (20) into which the expansion screw (100) can be inserted,
**characterised by** a fastening device (30) comprising an elongated offset element (40) and a fastening element (50), wherein the elongated offset element (40) has a first end (40a) and a second end (40b) and the fastening element (50) has a first end (50a) and a second end (50b), wherein the first end (40a) of the offset element (40) is connected to the sleeve-shaped shank (20) in such a manner that the offset element (40) extends essentially perpendicularly to the sleeve-shaped shank (20) and the expansion region (10), wherein the second end (40b) of the offset element (40) is connected to the first end (50a) of the fastening element (50) in such a manner that the fastening element (50) extends essentially perpendicularly to the offset element (40) and essentially parallel to the sleeve-shaped shank (20) and the expansion region (10) and wherein the fastening device (30) comprises a sleeve-shaped insertion shank (60) that is positioned at the first end (40a) of the offset element (40) and in which the sleeve-shaped shank (20) can be accommodated for connection to the offset element (40).

2. Dowel device (1) according to claim 1, **characterised in that** the fastening element (50) is in the form of a threaded pin (52).

## Revendications

1. Dispositif à cheville (1) contenant :
- une zone d'expansion (10) s'étendant sur une partie de la longueur complète du dispositif à cheville (1), laquelle zone d'expansion pouvant s'écarter dans le dispositif à cheville (1) par rotation d'une vis d'expansion (100), et
- une tige en forme de douille (20) dans laquelle la vis d'expansion (100) peut être insérée,
**caractérisé par** un dispositif d'assemblage (30) contenant un élément de déport longitudinal (40) ainsi qu'un élément d'assemblage (50), dans lequel l'élément de déport longitudinal (40) comporte une première extrémité (40a) ainsi qu'une seconde extrémité (40b) et l'élément d'assemblage (50) comporte une première extrémité (50a) ainsi qu'une seconde extrémité (50b), et dans lequel la première extrémité (40a) de l'élément de déport (40) est reliée à la tige en forme de douille (20) de sorte que l'élément de déport (40) s'étend de manière sensiblement perpendiculaire à la tige en forme de douille (20) et à la zone d'expansion (10), et dans lequel la seconde extrémité (40b) de l'élément de déport (40) est reliée à la première extrémité (50a) de l'élément d'assemblage (50), de sorte que l'élément d'assemblage (50) s'étend de manière sensiblement perpendiculaire à l'élément de déport (40) et sensiblement parallèle à la tige en forme de douille (20) et à la zone d'expansion (10), dans lequel le dispositif d'assemblage (30) contient une tige d'insertion en forme de douille (60) qui est positionnée sur la première extrémité (40a) de l'élément de déport (40) et dans laquelle la tige en forme de douille (20) peut être reçue pour un assemblage avec l'élément de déport (40).

2. Dispositif à cheville (1) selon la revendication 1,
**caractérisé en ce que** l'élément d'assemblage (50) est conçu sous la forme d'une tige filetée (52).
